# EUROPEAN PATENT APPLICATION

(11) **EP 3 176 412 A1**
(43) Date of publication of application: **07.06.2017**
(21) Application number: 15198101.6
(22) Date of filing: 04.12.2015
(51) Int. Cl.: F02D 19/06

(54) **MULTI-FUEL AND FAST FLUSHING SYSTEM FOR POWER PLANTS**

(71) Applicant: Caterpillar Motoren GmbH & Co. KG, 24159 Kiel (DE)
(72) Inventor: von der Osten-Sack, Andreas, 24145 Kiel (DE)
(74) Representative: Kramer Barske Schmidtchen Patentanwälte PartG mbB

(57) **Abstract**

A multi-fuel supply system (1) is proposed for operating an internal combustion engine (100) with multiple chemically incompatible fuel types including alternative fuels such as pyrolysis oil based fuels and crude oil based fuels such as Diesel fuel oil and heavy fuel oil, and a chemically compatible cleaning fuel. The multi-fuel supply system (1) comprises an internal combustion engine (100), an engine input valve assembly (200) fluidly connected to an input of the engine fuel system (121) and an engine output valve assembly (300) fluidly connected to an output of the engine fuel system (121) as well as an engine by-pass line (110) to by-pass internal combustion engine (100). The multi-fuel supply system (1) comprises a crude oil fuel recirculating unit (114A), a cleaning fuel supply (114C), and an alternative fuel recirculating unit (114B) as well as a waste tank (244). Engine input valve assembly (200) and an engine output valve assembly (300) allow safely switching between incompatible fuels by using the cleaning fuel in-between.

## Description

### Technical Field

The present disclosure generally refers to switching internal combustion engines (ICEs) back and forth between pyrolysis oil based fuel operation and crude oil based fuel operation, in particular within a multi-fuel based power plant, operating, for example, crude oil based fuels and alternative fuels.

### Background

Alternative fuels replacing crude oil based fuels are the subject of ongoing interest, in particular with respect to the replacement of crude oil based fuels such as diesel fuel (DFO), light fuel oil (LFO), and heavy fuel oil (HFO). Alternative fuels include first generation (crude) biofuels (e.g. soya bean oil, palm oil, rapeseed oil, canola oil, oils based on animal fat), second generation biofuels (e.g. treated soya bean oil, palm oil, rapeseed oil, canola oil and Bio Diesel) and third generation biofuels (e.g. oils made of non food corps, i.e. waste biomass).

Examples of third generation biofuels include "pyrolysis oils" obtained from the pyrolysis of, for example, wood or agricultural wastes, such as the stalks of wheat or corn, grass, wood, wood shavings, grapes, and sugar cane. In general, pyrolysis oil is predominantly produced by the "fast pyrolysis" technology, which comprises rapid pyrolysation of biomass in a fluidized bubbling sand bed reactor, but not only limited to this procedure, wherein the solid heat-carrying medium is circulated and, therefore, the residence time of solids is well-controlled and high heating rates (up to 1000 °C/second) are obtained.

The chemical composition and the physical properties of alternative fuels such as pyrolysis oil based fuels can differ significantly from those of crude oil based fuels such as DFO, LFO, and HFO, in particular with respect to the high content of water, oxygen and sugar, and the acidic value. Moreover, as pyrolysis oils include polar hydrocarbons and large amounts of water, they are almost immiscible with crude oil based fuels, which consist mainly of saturated olefinic and aromatic hydrocarbons. Finally, the acidic value of pyrolysis oil based fuels results in strong corrosion acting on contacted metal parts in engine systems. Accordingly, the use of alternative fuels may require an adaptation of ICEs to those specific features of alternative fuels. This may in particular be the case for large ICEs operated at medium speed.

An exemplary power plant configuration is disclosed, for example, in WO 2013/127526 A1 by Caterpillar Motoren GmbH & Co. KG.

The present disclosure is directed, at least in part, to improving or overcoming one or more aspects of the related prior art and particularly to simplify the operation of a power plant operating ICEs with alternative fuels such as pyrolysis oil based fuels.

### Summary of the Disclosure

According to an aspect of the present disclosure, a multi-fuel supply system is disclosed for operating an internal combustion engine with multiple chemically incompatible fuel types including alternative fuels such as pyrolysis oil based fuels and crude oil based fuels such as Diesel fuel oil and heavy fuel oil, and a chemically compatible cleaning fuel. The multi-fuel supply system comprises an internal combustion engine for operation with the alternative fuel, the cleaning fuel, and the crude oil based fuel, the internal combustion engine comprising an engine fuel system, and an engine input valve assembly fluidly connected to an input of the engine fuel system. The multi-fuel supply system comprises further an engine output valve assembly fluidly connected to an output of the engine fuel system, an engine by-pass line fluidly connected to the engine input valve assembly and the engine output valve assembly to by-pass internal combustion engine, and a crude oil fuel recirculating unit fluidly connected to the engine input valve assembly and the engine output valve assembly and configured to receive as a fuel the crude oil based fuel, to supply the engine fuel system with the same via the engine input valve assembly, and to receive unused fuel from the engine fuel system via the engine output valve assembly, the crude oil fuel recirculating unit comprising a crude oil circulation tank and a crude oil circulating pump. The multi-fuel supply system comprises further a cleaning fuel supply configured to receive as a fuel the cleaning fuel, and to supply the engine fuel system with the same via the engine input valve assembly, the cleaning fuel supply comprising a cleaning fuel supply pump, an alternative fuel recirculating unit fluidly connected to the engine input valve assembly and the engine output valve assembly and configured to receive as a fuel the alternative fuel, or the cleaning fuel from the cleaning fuel supply, and to supply the engine fuel system with the same via the engine input valve assembly, the alternative fuel recirculating unit comprising an alternative fuel circulation tank and an alternative fuel circulating pump, and a waste tank fluidly connected to the engine output valve assembly.

According to another aspect of the present disclosure, a method for operating a multi-fuel power plant as summarized above comprises operating the internal combustion engine with alternative fuel such that the alternative fuel recirculating unit is filled essentially with the alternative fuel, providing a cleaning fuel that is chemically compatible to the alternative fuel and, in particular, allows operation of the internal combustion engine, and configuring the engine input valve assembly and the engine output valve assembly such that the internal combustion engine is provided with the cleaning fuel and such that unused alternative fuel is released into the waste tank.

According to another aspect of the present disclosure, a method for switching a multi-fuel power plant as summarized above from crude oil based operation to alternative fuel based operation comprises operating the internal combustion engine with the crude oil based fuel using the crude oil fuel recirculating unit, providing a cleaning fuel that is chemically compatible to the crude oil based fuel and, in particular, allows operation of the internal combustion engine, and providing an alternative fuel recirculating unit filled with cleaning fuel and ready for performing a cleaning fuel based operation of the internal combustion engine. The method further comprises configuring the engine input valve assembly and the engine output valve assembly such that the internal combustion engine is provided with the cleaning fuel and unused crude oil based fuel is released into the waste tank from internal combustion engine via the engine output valve assembly, configuring the engine input valve assembly and the engine output valve assembly such that the internal combustion engine is operated for a time period based on cleaning fuel using the alternative fuel recirculating unit such that system parameters of the internal combustion engine are suitable for alternative fuel operation, and providing alternative fuel to the alternative fuel recirculating unit, thereby completing the switch-over procedure to alternative fuel based operation.

In contrast to the prior art systems, the complexity of the multi-fuel supply system as disclosed above is reduced, thereby reducing the risk of errors and hazardous operation modes in case of human and automatic control failures.

The herein disclosed concepts are based on the following considerations: The engine as the central unit needs to be supplied with fuel, and in particular for power plants directed to inter alia the use of alternative fuels, the engine needs to be supplied with a large variety of fuels such as any kind of today's bio fuels such as Pyrolysis oil as well as fossil based fuels or ethanol based fuel, whichever is intended to be used. The herein proposed concepts are - in contrast to complex combinations of a DFO / HFO / bio fuel oil / ethanol based fuel system - insensitive with respect to starting or stopping by separating the DFO/HFO lines and bio fuel lines when introducing an independent Pyrolysis oil system. In particular, the starting, stopping, switching, and emergency procedures may become more effective and reliable. Specifically, the risk in case of a hanging / not working valve to cause a situation in which the Pyrolysis/bio oil fuel line is contaminated with fossil fuels may be reduced. Thus, clogging piping and values as well as undefined fuel mixtures for a longer time period can be avoided.

Other features and aspects of this disclosure will be apparent from the following description and the accompanying drawings.

### Brief Description of the Drawings

The accompanying drawings, which are incorporated herein and constitute a part of the specification, illustrate exemplary embodiments of the disclosure and, together with the description, serve to explain the principles of the disclosure. In the drawings:
Fig. 1 shows a schematic block diagram of an exemplary embodiment of an engine section of a multi-fuel power plant;
Fig. 2 shows an alternative embodiment of an engine input valve assembly;
Fig. 3 shows an alternative embodiment of an engine output valve assembly; and
Fig. 4 is a flowchart illustrating the operation of the multi-fuel power plant with different types of fuels.

### Detailed Description

The following is a detailed description of exemplary embodiments of the present disclosure. The exemplary embodiments described therein and illustrated in the drawings are intended to teach the principles of the present disclosure, enabling those of ordinary skill in the art to implement and use the present disclosure in many different environments and for many different applications. Therefore, the exemplary embodiments are not intended to be, and should not be considered as, a limiting description of the scope of patent protection. Rather, the scope of patent protection shall be defined by the appended claims.

The present disclosure may be based in part on the realization that the operation of a power plant with alternative fuels should not be affected by the specific features of the alternative fuel. For example, corrosive activity may be limited by temporally limiting the contact of a surface with a pyrolysis based fuel as much as possible. Flushing and thereby cleaning components after being in contact with alternative fuels may reduce any of those effects and, at the same time, bring that component or its related unit within the power plant in a condition that would allow resuming operation because, for example, clogging by chemical reaction between fuel types can be avoided.

Regarding some aspects, the present disclosure may be based in part on the realization that the possibility to flush units of a power plant independently of another may increase flexibility, for example, when shutting off an engine or switching between fuel types. The ability to independently flush and thereby clean, for example, a pyrolysis oil based fuel section may allow maintaining the respective unit in a condition for resuming operation. This is in particular the case when one, both, or up to all units operated with pyrolysis oil based fuel need to be flushed and cleaned following an emergency shut off procedure of the power plant or following an (e.g. emergency) switching procedure to, for example, an auxiliary fuel.

While herein it is exemplarily referred to crude oil based fuel, alternative fuel, and cleaning fuel, with respect to various aspects this will be generally understood by the skilled person as examples for fuel types. Accordingly, in some embodiments, crude oil based fuel and alternative fuel may be considered as examples of main fuels, each enabling long term engine operation. Cleaning fuel may be considered as an example of an auxiliary fuel that allows switching between the main fuels (therefore also referred to switching fuel when used for that purpose). Thus, the cleaning fuel may clean the fuel system from the previously used main fuel, which may be in particular of interest if the main fuels are not chemical and/or physical compatible with each other.

Moreover, it will be understood that in the case that the cleaning fuel itself also allows long term operation of the engine, also the cleaning fuel may in some aspects be considered a main fuel.

Furthermore, the cleaning fuel is referred to as a fuel (or switching fuel) because the cleaning fuel may be used for cleaning the fuel system during continuous operation of the engine based on that cleaning fuel, in particular when switching between chemically incompatible fuels. However, the cleaning fuel may also be used as a cleaning fluid that is run through one or more components of the fuel system to clean the same while the engine is not operating, for example, when the engine is shut off for service or an emergency shut of had occurred. In particular, the cleaning fuel may be considered a cleaning fluid in the case that the providing of the pyrolysis oil based fuel, for example the pyrolysis process itself and the treatment of the pyrolysis oil based fuel, are located at a different location than the power generating process as in that case the cleaning fuel locally may not be used as a fuel.

Power plant systems for operating with multiple different fuels include usually a power house (comprising a multi-fuel supply system with one or more internal combustion engines), a tank arrangement (with tanks for the various fuel types), and a fuel treatment building (if conditioning and treating of specific fuel types is required). An exemplary system is, for example, disclosed in the above mentioned WO 2013/127526 A1.

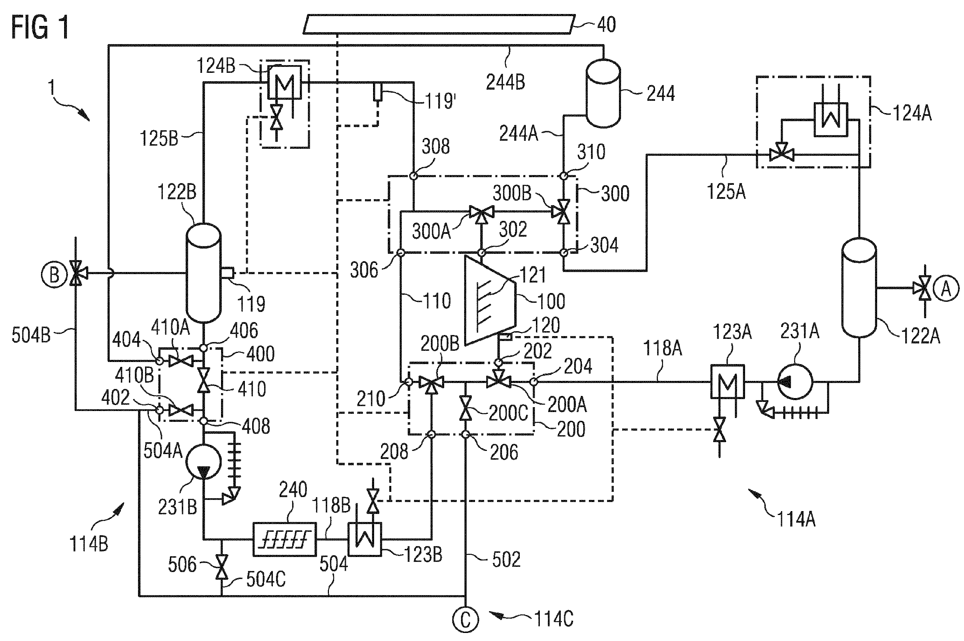

In the following, a multi-fuel supply system is disclosed in connection with Figs. 1 to 3 that allows operating an internal combustion engine 100 with multiple chemically incompatible fuel types including alternative fuels such as pyrolysis oil based fuels and crude oil based fuels such as Diesel fuel oil and heavy fuel oil, and a chemically compatible cleaning fuel. Accordingly, a multi-fuel supply system comprises ports - schematically indicated by A, B, and C in Fig. 1 - for, respectively, receiving crude oil based fuels such as Diesel fuel oil and heavy fuel oil, alternative fuels such as pyrolysis oil based fuels, and a cleaning fuel that is chemically compatible with the respective alternative fuel as well as the respective crude oil based fuel such as ethanol-based fuels that may include besides ethanol - additional components, for example, a bio-oil such as castor oil and optionally some additives.

Herein it is assumed that the fuels provided at ports A, B, C are treated and ready for combustion. In particular with respect to alternative fuels such as pyrolysis oil based fuel, the conditioning adapts, for example, the viscosity by adding, for example, ethanol or an ethanol based fuel such as a cleaning fuel. In addition, the conditioning may provide some homogenization of the viscosity adapted fuel, for example, by passing the mixture through one or more homogenizers and/or filters.

Referring to the cleaning fuel, an ethanol-based fuel may consist of, based on the total volume of ethanol and castor oil, 20 to 90 % by volume ethanol and 80 to 10 % by volume castor oil (in particular 40 to 90 % by volume ethanol and 60 to 10 % by volume castor oil), and optionally including one or more additives in a total amount of up to 3 wt.-% of the total weight of the ethanol and castor oil.

The ethanol may be from biological sources. The term "ethanol" as used herein and in the appended claims comprises both absolute ethanol (i.e. ethanol containing less than 2 % by volume (for example, less than 0,5 % by volume) water) and ethanol containing considerable amounts of water. As a bio-oil, castor oil may be used in the present ethanol-based fuel. Caster oil is a vegetable oil obtained from castor seed of the castor plant *Ricinus communis.* Ricinoleic acid, which is the main fatty acid chain of castor oil (85 to 95 wt.-%), has a hydroxyl group at C₁₂, which provides the fatty acid chain with polar properties, promoting solubility in polar liquids like ethanol. At the same time, the remaining non-polar hydrocarbon chain of ricinoleic acid still provides sufficient non-polar character such that castor oil is miscible with non-polar liquids, like, for example, crude oil based fuels such as diesel fuel, LFO or HFO. The ethanol content may be 40 to 80 % by volume (e.g. 45 to 65 % by volume or 45 to 55 % by volume or 48 to 52 % by volume) and the castor oil content is 60 to 20 % by volume (e.g. 55 to 35 % by volume or 55 to 45 % by volume or 52 to 48 % by volume). For economical reasons, the ethanol content of the ethanol-based fuel may be as high as possible, for example, 60 to 90 % by volume, or 70 to 90 % by volume, or 80 to 90 % by volume or 85 to 90 % by volume, in case the ethanol-based fuel is to be used for continuous (long-time) operation of an ICE, in particular a self-ignition ICE.

The ethanol-based fuel may optionally include one or more additives, for example, in a total amount of up to 3 wt.-% of the total weight of the ethanol and castor oil, preferably in a total amount of up to 2 wt.-%, in particular in a total amount of up to 1 wt.-% of the total weight of the ethanol and castor oil. Said additives may be selected from the group of additives consisting of thermal stabilizers, aging stabilizers, antioxidants, coloring agents, dyes, rust inhibitors, inhibitors of gum formation, metal deactivators, upper cylinder lubricants, friction modifiers, detergents, bacteriostatic agents, fungicides, microbiocides, and mixtures thereof.

The additives optionally included in the ethanol-based fuel may serve to improve one or more properties of the ethanol-based fuel, if considered to be necessary in view of the used engine type or any other circumstances, which require the use of additives. However, in view of environmental concerns (such as increased unwanted emissions), the ethanol-based fuel may be provided devoid of any additives.

Further details of an ethanol based fuel are disclosed, for example, in WO 2013/127489 A1 entitled "ETHANOL-BASED FUEL AND USE THEREOF" by Caterpillar Motoren GmbH & Co. KG. As disclosed therein, such an ethanol-based fuel may be chemically compatible with crude oil based fuels as well as alternative fuels such as Pyrolysis oil based fuels. In contrast, crude oil based fuels and alternative fuels such as Pyrolysis oil based fuels may perform chemical reactions once they become in contact, thereby changing the properties required for using the same as a fuel or fuel mixture.

Referring to Fig. 1, a multi-fuel supply system 1 is illustrated that comprises an internal combustion engine (ICE) 100. ICE 100 is configured for operation with the alternative fuel, the cleaning fuel, and the crude oil based fuel and comprises an engine fuel system 121.

Furthermore, port A of multi-fuel supply system 1 is the fuel input port for a crude oil fuel recirculating unit 114A, port B of multi-fuel supply system 1 is the fuel input port for an alternative fuel recirculating unit 114B, and port C of multi-fuel supply system 1 is the fuel input port for a cleaning fuel supply 114C.

Multi-fuel supply system 1 further comprises an engine input valve assembly 200 fluidly connected to an input of the engine fuel system 121, an engine output valve assembly 300 fluidly connected to an output of the engine fuel system 121, and a flushing valve assembly 400 being essentially part of alternative fuel recirculating unit 114B.

Multi-fuel supply system 1 further comprises an engine by-pass line 110 fluidly connected to engine input valve assembly 200 and engine output valve assembly 300 to by-pass ICE 100, if needed.

Crude oil fuel recirculating unit 114A is fluidly connected to engine input valve assembly 200 and engine output valve assembly 300. It can receive as a fuel the crude oil based fuel e.g. from an HFO tank or an DFO tank (not explicitly shown), to supply engine fuel system 121 with the same via engine input valve assembly 200. Crude oil fuel recirculating unit 114A receives during crude oil based operation unused fuel from engine fuel system 121 via engine output valve assembly 300.

As it is common, crude oil fuel recirculating unit 114A comprises a crude oil circulation tank 122A and a crude oil circulating pump 231A, e.g. upstream ICE 100 and specifically upstream engine input valve assembly 200.

In some embodiments, crude oil fuel recirculating unit 114A may further comprise a fuel heat exchanger 123A and/or a fuel cooling unit 124A. As indicated by a dashed control line, a viscosity sensor 120 within or close to engine fuel system 121 may be used to control fuel heat exchanger 123A usually being upstream of engine input valve assembly 200. Fuel heat exchanger 123A and crude oil circulating pump 231A may be located downstream of crude oil circulation tank 122A within a fuel supply line 118A.

Fuel cooling unit 124A may comprise e.g. a DFO cooler, a by-pass of the same, and a valve unit for controlling the selected path of the fuel. Fuel cooling unit 124A may be positioned downstream of engine output valve assembly 300 and upstream of crude oil circulation tank 122A.

In a similar configuration, alternative fuel recirculating unit 114B is fluidly connected to engine input valve assembly 200 and engine output valve assembly 300. At port B, alternative fuel recirculating unit 114B is configured to receive as a fuel the alternative fuel from an alternative fuel tank (not explicitly shown) or the cleaning fuel from the cleaning fuel supply (or a cleaning fuel tank).

Alternative fuel recirculating unit 114B is configured to supply engine fuel system 121 with the respective fuel via engine input valve assembly 200. Alternative fuel recirculating unit 114B comprises an alternative fuel circulation tank 122B, an alternative fuel circulating pump 231B, a homogenizer 240 (with or without by-pass), and a fuel heat exchanger 123B (e.g. upstream of engine input valve assembly 200 within a fuel supply line 118B), and an alternative fuel cooling unit 124B downstream of engine output valve assembly 300. As indicated again by a dashed control line, viscosity sensor 120 within or close to engine fuel system 121 may again be used to control fuel heat exchanger 123B. Alternative fuel cooling unit 124B may be controlled by a temperature sensor 119 in alternative fuel circulation tank 122B as similarly indicated by a respective dashed control line. Moreover, the below disclosed switching procedures may be based on temperature sensor 119, viscosity sensor 120.

Moreover, there may be a specific temperature sensor provided for controlling the switching process from cleaning fuel operation to alternative fuel operation. The specific sensor may be provided at the engine's exit side, e.g. downstream engine fuel system 121, e.g. downstream ICE 100 such as downstream engine output valve assembly 300. In Fig. 1 an exemplary temperature sensor 119' is positioned to measure the temperature with respect to the fuel within a fuel return line 125B between alternative fuel cooling unit 124B and engine output valve assembly 300.

In general, multi-fuel supply system 1 may comprise a control unit or be controlled via a control unit of the power plant. In Fig. 1, a control unit 40 is schematically indicated and connected to, for example, engine input valve assembly 200 and engine output valve assembly 300 (see again exemplary dashed control line connections). Moreover, control unit 40 may be connected to the above mentioned sensors and valves.

As further schematically indicated in Fig. 1, cleaning fuel supply 114C is configured to receive as a fuel the cleaning fuel, and to supply the engine fuel system 121 with the same via a cleaning fuel line 502 fluidly connected to engine input valve assembly 200.

Cleaning fuel supply 114C may comprise a cleaning fuel supply pump (not shown) and additional lines for flushing alternative fuel recirculating unit 114B by supplying cleaning fuel e.g. downstream of alternative fuel circulation tank 122B and releasing a mixture of the cleaning fuel and the alternative fuel from alternative fuel recirculating unit 114B. In addition to the cleaning purpose, the cleaning fuel may be used to work as a temperature puffer in case of switching between high heated HFO out of fuel line 118A and a more temperature sensitive alternative (e.g. Pyrolysis oil) fuel out of fuel line 118 B. In this case the cleaning fuel cools down the fuel lines (e.g. of engine fuel system) from former used HFO temperatures to an appropriate temperature level for continues pyrolysis oil application.

Multi-fuel supply system 1 further comprises a waste fuel tank 244 fluidly connected to engine output valve assembly 300 as well as to alternative fuel recirculating unit 114B for collecting of any fuel mixture to be taken out of the system fast due to being potentially critical for the engine operation, e.g. by clogging the injectors or valves.

In general, within the fuel lines, in addition to viscosity sensor 120 and temperature sensor 119, various additional temperature and viscosity sensors (not shown) may be provided within multi-fuel supply system 1. Those components may be used, for example, to control the fuel consistency or engine temperature for proper operation of ICE 100.

The circulation tanks 122A, 122B may be refilled with the respective fuel from conditioning units to compensate for the fuel combusted by ICE 100. During stable operation with one type of fuel, fuel unused by ICE 100 may be returned to respective circulation tanks via fuel return lines 125A, 125B. Depending on the type of fuel, the returned unused fuel may be cooled by the fuel cooling units 124A, 124B, if required. Accordingly, a fuel recirculating cycle may comprise, starting at viscosity sensor 120, engine fuel system 121, fuel cooling unit 124A, 124B, circulation tank 122A, 122B, and heat exchanger 123A, 123B as well as fuel supply lines 118A, 118B and fuel return lines 125A, 125B, respectively.

Moreover, a cleaning fuel line section 504B may be used to supply cleaning fuel to alternative fuel circulation tank 122B thereby using alternative fuel recirculating unit 114B for continuous operation of ICE 100 with the cleaning fuel.

There may be various approaches of flushing the components of alternative fuel recirculating unit 114B and in particular ICE 100 to avoid any chemical reaction with the crude oil based fuel.

Referring to Fig. 1, flushing of ICE 100 may be performed via engine input valve assembly 200 being connected to cleaning fuel line 502 to wash engine fuel system 121 with cleaning fuel.

Flushing of alternative fuel recirculating unit 114B may be performed via flushing valve assembly 400 being connected to a cleaning fuel line section 504A, i.e. upstream of alternative fuel circulating pump 231B, or e.g. at a specific secondary flushing valve 506 connecting a cleaning fuel line section 504C with fuel supply line 118B. Moreover, for the flushing, ICE 100 may be bypassed with engine by-pass line 110.

In any case, the fluid mixture including cleaning fuel and alternative fuel is released from alternative fuel recirculating unit 114B into waste tank 244 by an engine release line 244A and a recirculating unit release line 244B, respectively.

In the embodiment shown in Fig. 1, engine input valve assembly 200 comprises an engine outlet 202, a crude oil inlet 204, a cleaning fuel inlet 206, an alternative fuel inlet 208, and a bypass outlet 210. In an exemplary input valve configuration, crude oil inlet 204 is fluidly connected with engine outlet 202, cleaning fuel inlet 206 with engine outlet 202, alternative fuel inlet 208 with engine outlet 202, cleaning fuel inlet 206 with bypass outlet 210, and alternative fuel inlet 208 with bypass outlet 210.

For example, engine input valve assembly 200 comprises a first three-way valve 200A (also referred to as supply switching valve) fluidly connected, at a first end, to engine outlet 202, at a second end, to crude oil inlet 204, and, at a third end, to a first end of a second three-way valve 200B (also referred to as engine by-pass valve) of engine input valve assembly 200 as well as a two-way valve 200C of engine input valve assembly 200. Two-way valve 200C is further fluidly connected to cleaning fuel inlet 206, and second three-way valve 200B is fluidly connected, at a second end, to alternative fuel inlet 208, and, at a third end, to bypass outlet 210.

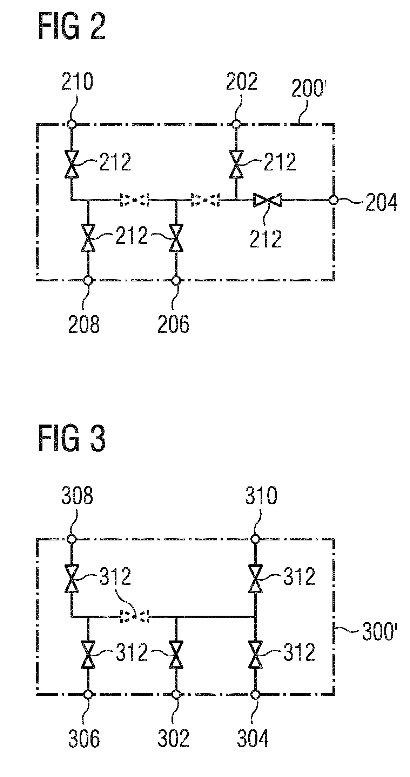

In an alternative embodiment shown in Fig. 2, engine input valve assembly 200' comprise a two-way valve 212 at each inlet that each are fluidly connected to every other two-way valve 212. Based on those five two-way valves, a continuous operation of ICE 100 with crude oil is not possible while flushing alternative fuel recirculating unit 114B via engine by-pass line 110. To perform the continuous operation, additional valves would need to be provided between the crude oil side with in-/outlets 202/204 and the flushing side with in-/outlets 208/210 (and eventually 206) of engine input valve assembly 200' as illustrated by the dashed two-way valves in Fig. 2. A similar modification would need to be performed for the engine output valve assembly as described below.

In the embodiment shown in Fig. 1, engine output valve assembly 300 comprises an engine inlet 302, a crude oil outlet 304, a bypass inlet 306, an alternative fuel outlet 308, and a waste fuel outlet 310. In an exemplary output valve configuration, engine inlet 302 is fluidly connect with crude oil outlet 304, engine inlet 302 with alternative fuel outlet 308, engine inlet 302 with waste fuel outlet 310, and bypass inlet 306 with alternative fuel outlet 308.

For example, engine output valve assembly 300 comprises a first three-way valve 300A (also referred to as return switching valve) fluidly connected, at a first end, to engine inlet 302, at a second end, to bypass inlet 306 and alternative fuel outlet 308, and, at a third end, to a first end of a second three-way valve 300B (also referred to as flushing circulating valve). Second three-way valve 300B is further fluidly connected, at a second end, to crude oil outlet 304, and, at a third end, to waste fuel outlet 310.

In an alternative embodiment shown in Fig. 3, engine output valve assembly 300' comprise a two-way valve 312 at each inlet that each are fluidly connected to every other two-way valve 312. The above mentioned continuous operation during flushing requires a separation between the crude oil side with in-/outlets 302/304 and the flushing side of in-/outlets 306/308 of engine output valve assembly 300' as illustrated by the dashed two-way valve in Fig. 3.

The fluid connections provided by the valve configurations of engine input valve assembly 200 and/or engine output valve assembly 300 are direct non-deviating and non-splitting fluid connections. In particular, a selected fluid connection is the only fluid connection provided by the valve configuration using the respective outlets/inlets or wherein multiple fluid connections are provided where feasible at the same time but being fluidly not-interacting with each other.

Flushing valve assembly 400 comprises a flushing input 402 downstream alternative fuel circulation tank 122B, and in particular upstream alternative fuel pump 231B and upstream a circulating output 408 of flushing valve assembly 400. Flushing input 402 is fluidly connected with cleaning fuel supply 114C via cleaning fuel line 502 and cleaning fuel line section 504A. Flushing valve assembly 400 comprises further a flushing output 404 upstream flushing input 402, and in particular downstream alternative fuel circulation tank 122B and circulating input 406. Flushing output 404 is fluidly connected with waste tank 244 via release line 244B.

Flushing valve assembly 400 comprises further a valve configuration to allow providing cleaning fuel at flushing input 402, while releasing any washed out fuel mix from flushing output 404. For example, a valve 410 may be provided for fluidly separating flushing output 404/circulating input 406 from flushing input 402/circulating output 408 and respective valves 410A, 410B between flushing output 404 and circulating input 406 as well as flushing input 402 and circulating output 408, respectively.

Flushing valve assembly 400 may further relate to secondary flushing valve 506 allowing flushing even downstream alternative fuel pump 231B. Secondary flushing valve 506 is fluidly connected with cleaning fuel supply 114C via cleaning fuel line 502 and cleaning fuel line section 504C.

Control unit 40 is configured to control the flow passages in engine input valve assembly 200 and engine output valve assembly 300 and in particular controls the valve configurations and valves thereof, i.e. the opening and/or directionality of two- and three-way valves, for example.

### Industrial Applicability

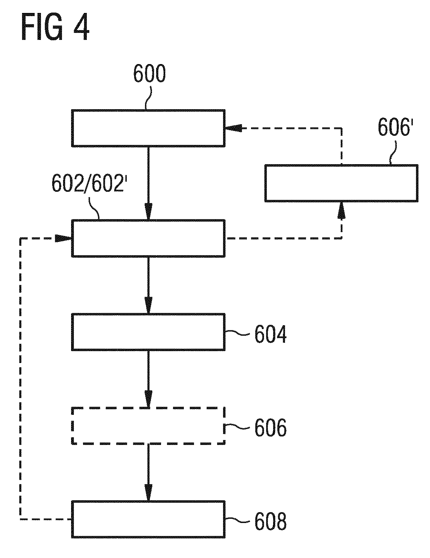

Referring to Fig. 4 and Fig. 1, an exemplary switch over process from, for example, pyrolysis oil operation (as an example for alternative fuel operation) to crude oil based fuel operation may include the following steps that may be performed while the ICE may be continuously operated.

Operating ICE with pyrolysis oil as a main fuel (step 600): A pyrolysis oil based fuel fuel treatment unit and pyrolysis oil based fuel conditioning may ensure the required viscosity of, for example, 12-28 cSt by providing the alternative fuel at a temperature within the range of 62-65 °C. Any unburned pyrolysis oil may be kept within alternative fuel recirculating unit 114B and may be cooled with fuel cooling unit 124B, if required. Circulation tank 122B may be refilled with the pyrolysis oil based fuel only.

Configuring engine input valve assembly 200 and engine output valve assembly 300 for flushing ICE 100 and engine fuel system 121 (first cleaning step 602):
Engine input valve assembly 200 and engine output valve assembly 300 are set such that ICE 100 is provided with the cleaning fuel and unused alternative fuel is released into waste tank 244. This is the first step of cleaning the important engine fuel system 121 of ICE 100.

Configuring engine input valve assembly 200 and engine output valve assembly 300, and flushing valve assembly 400 for flushing the components of alternative fuel recirculating unit 114B (second cleaning step 604):

Engine input valve assembly 200, engine output valve assembly 300 are further set such that the cleaning fuel washes remaining alternative fuel into waste tank 244 with engine by-pass line 110 being a part of alternative fuel recirculating unit 114B. Moreover, flushing valve assembly 400 is set to receive cleaning fuel from cleaning fuel supply 114C (flushing inlet or secondary flushing valve 506) such that the cleaning fuel washes the alternative fuel out of flushing output.

At this stage, it can be switched to a regular cleaning fuel operation (step 606), e.g. by providing cleaning fuel at port B to refill alternative fuel circulation tank 122B continuously.

Alternatively, it can be switched directly to crude oil based operation at this stage or even while step 604 is still ongoing (or is not performed at all).

Configuring engine input valve assembly 200 and engine output valve assembly 300 to operating ICE with e.g. DFO as main fuel (step 608):
Engine input valve assembly 200 and engine output valve assembly 300 are set such that ICE 100 is provided with crude oil based fuel, after ICE 100 having been cleaned from alternative fuel. A crude oil based fuel conditioning may be provided at first with Diesel fuel oil from a Diesel fuel tank. Accordingly, circulation tank 122A may be refilled with Diesel fuel only. Conditioning of Diesel fuel may ensure the required viscosity of 2-4 cSt by providing the Diesel fuel at, for example, 18-20 °C. Diesel fuel may in general be provided in a temperature range between 10 °C to 70 °C.

Similarly, in the known manner it may then be switched to different types of crude oil based fuels such as HFO. Usually, ICE 100 will be operated for at least several minutes with DFO to adapt the temperatures and other system parameters to an engine condition that is also suitable for HFO operation, for example.

It will be apparent, that in a similar manner it may be switched back to alternative fuel operation, however, specific temperature requirements may need to be considered such as a reduced temperature in alternative fuel recirculating unit 114B when used with pyrolysis based fuels.

Specifically, it is assumed that alternative fuel recirculating unit 114B is ready for operation with cleaning fuel. For example step 606 was performed when switching to crude oil based operation such that the complete system of alternative fuel recirculating unit 114B is filled with cleaning fuel due to operation of ICE 100 with cleaning fuel for a respective time period such that, for example, alternative fuel circulation tank 122B is completely filled with cleaning fuel.

Accordingly, crude oil based operation may be terminated by performing the first cleaning step, in this case referred to as 602'. Engine input valve assembly 200 and engine output valve assembly 300 are set such that ICE 100 is provided with the cleaning fuel and unused crude oil based fuel is released into waste tank 244 until ICE 100 and in particular engine fuel system 121 is cleaned from crude oil based fuel.

At this stage, it can be switched to a regular cleaning fuel operation (step 606'). Cleaning fuel is provided at port B to refill alternative fuel circulation tank 122B continuously with cleaning fuel. Initially, ICE 100 will still be at temperatures associated with crude oil based operation, e.g. in the range from 90-110 °C. As this temperature range may be too high for alternative fuel operation, the temperature of the cleaning fuel within return line 125B may be monitored, e.g. using temperature sensor 119'. The cleaning fuel operation is performed such that the temperature range for alternative fuel operation is reached, e.g. temperatures is the range of 65°. Thereby, one may be able to reduce or even avoid any chemical unwanted reactions during later alternative fuel operation.

As soon as temperature sensor 119' indicates that a required temperature threshold is reached, control unit 40 may indicate that switching to alternative fuel operation is allowable. A user initiated or an automated switching to alternative fuel operation of ICE 100 can be performed, e.g. by supplying at port B alternative fuel to alternative fuel circulation tank 122B. Thereby, once the complete system of alternative fuel recirculating unit 114B is filled with alternative fuel, ICE 100 is operated again the alternative fuel such pyrolysis oil based fuel being the main fuel (step 600).

In some embodiments, the cleaning fuel can be referred to as a switching fuel, which is chemically compatible to the crude oil based fuel as well as alternative fuel such as an pyrolysis oil based fuel and allows operation of the internal combustion engine, by supplying the cleaning fuel to the alternative fuel recirculating unit, thereby increasing the ratio of the cleaning fuel in the engine fuel system.

In some embodiments, when operating the internal combustion engine with the cleaning fuel, the temperature of the switching fuel in the alternative fuel recirculating unit is changed towards a temperature used for the successively supplied fuel such as DFO or HFO or alternative fuel in the engine fuel system.

In some embodiments, the cleaning fuel is an ethanol-based fuel, consisting of, based on the total volume of ethanol and castor oil, 20 to 90 % by volume ethanol and 80 to 10 % by volume castor oil, and optionally including one or more additives in a total amount of up to 3 wt.-% of the total weight of the ethanol and castor oil.

In some embodiments, the internal combustion engine is operated as a self-ignition internal combustion engine with at least one fuel selected from the group of fuels comprising crude oil based fuels such as diesel fuel, light fuel oil, and heavy fuel oil, pyrolysis oil based fuels such as first generation biofuels including palm oil, canola oil, oils based on animal fat and second generation biofuels including oils made of non food corps and ethanol-based fuels such as ethanol castor oil compositions.

Although the preferred embodiments of this invention have been described herein, improvements and modifications may be incorporated without departing from the scope of the following claims.

## Claims

1. A multi-fuel supply system (1) for operating an internal combustion engine (100) with multiple chemically incompatible fuel types including alternative fuels such as pyrolysis oil based fuels and crude oil based fuels such as Diesel fuel oil and heavy fuel oil, and a chemically compatible cleaning fuel, the multi-fuel supply system (1) comprising:
an internal combustion engine (100) for operation with the alternative fuel, the cleaning fuel, and the crude oil based fuel, the internal combustion engine (100) comprising an engine fuel system (121);
an engine input valve assembly (200) fluidly connected to an input of the engine fuel system (121);
an engine output valve assembly (300) fluidly connected to an output of the engine fuel system (121);
an engine by-pass line (110) fluidly connected to the engine input valve assembly (200) and the engine output valve assembly (300) to by-pass internal combustion engine (100);
a crude oil fuel recirculating unit (114A) fluidly connected to the engine input valve assembly (200) and the engine output valve assembly (300) and configured to receive as a fuel the crude oil based fuel, to supply the engine fuel system (121) with the same via the engine input valve assembly (200), and to receive unused fuel from the engine fuel system (121) via the engine output valve assembly (300), the crude oil fuel recirculating unit (114A) comprising a crude oil circulation tank (122A) and a crude oil circulating pump (231A);
a cleaning fuel supply (114C) configured to receive as a fuel the cleaning fuel, and to supply the engine fuel system (121) with the same via the engine input valve assembly (200), the cleaning fuel supply (114C) comprising a cleaning fuel supply pump;
an alternative fuel recirculating unit (114B) fluidly connected to the engine input valve assembly (200) and the engine output valve assembly (300) and configured to receive as a fuel the alternative fuel, or the cleaning fuel from the cleaning fuel supply (114C), and to supply the engine fuel system (121) with the same via the engine input valve assembly (200), the alternative fuel recirculating unit (114B) comprising an alternative fuel circulation tank (122B) and an alternative fuel circulating pump (231B); and
a waste tank (244) fluidly connected to the engine output valve assembly (300).

2. The multi-fuel supply system (1) of claim 1, wherein the engine input valve assembly (200) comprises an engine outlet (202), a crude oil inlet (204), a cleaning fuel inlet (206), an alternative fuel inlet (208), and a bypass outlet (210), and an input valve configuration configured to fluidly connect
the crude oil inlet (204) with the engine outlet (202),
the cleaning fuel inlet (206) with the engine outlet (202),
the alternative fuel inlet (208) with the engine outlet (202),
the cleaning fuel inlet (206) with the bypass outlet (210), and/or
the alternative fuel inlet (208) with the bypass outlet (210).

3. The multi-fuel supply system (1) of claim 2, wherein the engine input valve assembly (200) comprises a first three-way valve (200A) fluidly connected, at a first end, to the engine outlet (202), at a second end, to the crude oil inlet (204), and, at a third end, to a first end of a second three-way valve (200B) and a two-way valve (200C), the two-way valve (200C) being further fluidly connected to the cleaning fuel inlet (206), and the second three-way valve (200B) is fluidly connected, at a second end, to the alternative fuel inlet (208), and, at a third end, to the bypass outlet (210).

4. The multi-fuel supply system (1) of any one of the preceding claims, wherein the engine output valve assembly (300) comprises an engine inlet (302), a crude oil outlet (304), a bypass inlet (306), an alternative fuel outlet (308), and a waste fuel outlet (310), and an output valve configuration configured to fluidly connect
the engine inlet (302) with the crude oil outlet (304),
the engine inlet (302) with the alternative fuel outlet (308),
the engine inlet (302) with the waste fuel outlet (310), and/or
the bypass inlet (306) with the alternative fuel outlet (308).

5. The multi-fuel supply system (1) of claim 4, wherein the engine output valve assembly (300) comprises a first three-way valve (300A) fluidly connected, at a first end, to the engine inlet (302), at a second end, to the bypass inlet (306) and the alternative fuel outlet (308), and, at a third end, to a first end of a second three-way valve (300B), and the second three-way valve (300B) being further fluidly connected, at a second end, to the crude oil outlet (304), and, at a third end, to the waste fuel outlet (310).

6. The multi-fuel supply system (1) of any one of the preceding claims, wherein the fluid connections provided by valve configurations of the engine input valve assembly (200) and/or the engine output valve assembly (300) are direct non-deviating and non-splitting fluid connections and wherein in particular a selected fluid connection is the only fluid connection provided by the valve configuration or wherein multiple fluid connections are provided where feasible at the same time but being fluidly not-interacting with each other.

7. The multi-fuel supply system (1) of any one of the preceding claims, wherein the engine input valve assembly (200) and/or the engine output valve assembly (300) comprise at least one of a two-way valve (200C) and a three-way valve, and
in particular a two-way valve (212, 312) at each inlet that each are fluidly connected to every other two-way valve (212, 312).

8. The multi-fuel supply system (1) of any one of the preceding claims, wherein the alternative fuel recirculating unit (114B) further comprises a temperature sensor (119, 119') in particular associated with the alternative fuel circulation tank (122B) and/or a return fuel line (125B), e.g. between the alternative fuel cooling unit (124B) and the engine output valve assembly (300); and/or
the multi-fuel supply system (1) further comprising a control unit (40) configured to control the flow passages in the engine input valve assembly (200) and the engine output valve assembly (300) and in particular to control the valve configurations and valves thereof and/or is configured to receive system parameters such as temperature parameters from the temperature sensor (119, 119') and/or viscosity parameters from a viscosity sensor (120) such that in particular a switching procedure between crude oil based fuel and alternative fuels is controlled to include a cleaning fuel based operation for a time period that bring the system parameters into a parameter range that is acceptable for the intended alternative fuel operation.

9. The multi-fuel supply system (1) of any one of the preceding claims, wherein
the crude oil fuel recirculating unit (114A) further comprising a crude oil heating unit (123A) and/or a crude oil cooling unit (124A); and/or
the alternative fuel recirculating unit (114B) further comprising an alternative fuel homogenizer (240), an alternative fuel heating unit (123B) and/or an alternative fuel cooling unit (124B); and/or
the alternative fuel recirculating unit (114B) further comprising a flushing valve assembly (400) comprising a flushing input (402) downstream the alternative fuel circulation tank (122B), and in particular upstream the alternative fuel pump (231B), fluidly connected with the cleaning fuel supply (114C), a flushing output (404) upstream the flushing input (402), and in particular downstream the alternative fuel circulation tank (122B), fluidly connected with the waste fuel tank via a flushing line, and a valve (410) for fluidly separating the flushing input (402) from the flushing output (404).

10. A multi-fuel power plant comprising:
a tank system comprising an alternative fuel tank, a cleaning fuel tank, and at least one crude oil based fuel tank such as a heavy fuel tank or a Diesel oil tank; and
a multi-fuel supply system (1) of any one of the preceding claims, wherein the at least one crude oil based fuel tank is fluidly connected with the crude oil circulation tank (122A), the alternative fuel tank is fluidly connected with the alternative fuel circulation tank (122B), and the cleaning fuel tank is fluidly connected with the cleaning fuel supply (114C).

11. A method for operating a multi-fuel power plant of claim 10, the method comprising:
operating the internal combustion engine (100) with alternative fuel such that the alternative fuel recirculating unit (114B) is filled essentially with the alternative fuel;
providing a cleaning fuel that is chemically compatible to the alternative fuel and, in particular, allows operation of the internal combustion engine (100); and
configuring the engine input valve assembly (200) and the engine output valve assembly (300) such that the internal combustion engine (100) is provided with the cleaning fuel and such that unused alternative fuel is released into the waste tank (244) from internal combustion engine (100) via the engine output valve assembly (300).

12. The method of claim 11, further comprising:
providing the cleaning fuel to the alternative fuel recirculating unit (114B) downstream the alternative fuel circulation tank (122B); and
configuring the engine input valve assembly (200) and the engine output valve assembly (300) such that the cleaning fuel washes remaining alternative fuel into the waste tank (244) with the engine by-pass line (110) being a part of the fuel path of the alternative fuel recirculating unit (114B), wherein in particular the flushing valve assembly (400) is configured to receive cleaning fuel from the cleaning fuel supply (114C) such that the cleaning fuel washes the alternative fuel out via the flushing output (404).

13. The method of claim 11 or claim 12, further comprising configuring the engine input valve assembly (200) and the engine output valve assembly (300) such that the internal combustion engine (100) is provided with crude oil based fuel, in particular after the internal combustion engine (100) has been cleaned from alternative fuel.

14. A method for switching a multi-fuel power plant of claim 10 from crude oil based operation to alternative fuel based operation, the method comprising:
operating the internal combustion engine (100) with the crude oil based fuel using the crude oil fuel recirculating unit (114A);
providing a cleaning fuel that is chemically compatible to the crude oil based fuel and, in particular, allows operation of the internal combustion engine (100),
providing an alternative fuel recirculating unit (114B) filled with cleaning fuel and ready for performing a cleaning fuel based operation of the internal combustion engine (100);
configuring the engine input valve assembly (200) and the engine output valve assembly (300) such that the internal combustion engine (100) is provided with the cleaning fuel and unused crude oil based fuel is released into the waste tank (244) from internal combustion engine (100) via the engine output valve assembly (300);
configuring the engine input valve assembly (200) and the engine output valve assembly (300) such that the internal combustion engine (100) is operated for a time period based on cleaning fuel using the alternative fuel recirculating unit (114B) such that system parameters of the internal combustion engine are suitable for alternative fuel operation; and
providing alternative fuel to the alternative fuel recirculating unit (114B), thereby completing the switch-over procedure to alternative fuel based operation.

15. The method of claim 14, further comprising:
detecting a system parameter during cleaning fuel based operation such as detecting a cleaning fuel temperature in a return line from the internal combustion engine (100), and signalling that an alternative fuel based operation can be initiated once a respective threshold value has been reached.
